# EUROPÄISCHE PATENTANMELDUNG

(11) **EP 4 292 716 A1**
(43) Veröffentlichungstag der Anmeldung: **20.12.2023**
(21) Anmeldenummer: 22179202.1
(22) Anmeldetag: 15.06.2022
(51) Int. Cl.: B05B 7/04, B22D 11/124

(54) **VERFAHREN ZUM HERSTELLEN EINER SPRÜHDÜSENEINRICHTUNG, DIE INSBESONDERE ZUM BESPRÜHEN EINES GIESSSTRANGS BEIM ABGIESSEN VON METALLISCHEN PRODUKTEN DIENT, SOWIE EINE SPRÜHDÜSENEINRICHTUNG**

(71) Anmelder: SMS Concast AG, 8027 Zürich (CH)
(72) Erfinder: FELDHAUS, Stephan, 8610 Uster (CH)
(74) Vertreter: Luchs, Willi

(57) **Zusammenfassung**

Bei einem Verfahren zum Herstellen einer Sprühdüseneinrichtung (1), die insbesondere zum Besprühen eines Giessstrangs beim Abgiessen von metallischen Produkten dient, ist vorgesehen, dass die Sprühdüseneinrichtung (1) einen Grundkörper (15) mit einem Lufteinlass (5) und einem Wassereinlass (6) sowie einen Düsenkörper (3) mit einer Mischkammer (9) zum Erzeugen eines Luft-/Wassergemisches aufweist, das durch wenigstens einen Düsenauslass (4) austreten kann. Der Lufteinlass (5) ist durch wenigstens eine Lufteinlassdüse (11) mit einer in die Mischkammer (9) ragenden Düsenspitze (12) gebildet und dort mit mindestens einer Luftaustrittsbohrung versehen. Der Wassereinlass (6) mündet in die Mischkammer nahe der Düsenspitze (12) des Lufteinlasses durch mindestens eine quer zur Längsachse der Mischkammer gerichtete Wasseraustrittsbohrung. Mindestens ein Teilbereich der Sprühdüseneinrichtung (1) wird durch ein vorzugsweise als 3D-Druckverfahren arbeitendes generatives Herstellungsverfahren erzeugt. Damit kann eine optimierte Luft/Wassermischung und Sprühwirkung dieser Sprühdüseneinrichtung (1) erzielt werden.

## Beschreibung

Die Erfindung betrifft ein Verfahren zum Herstellen einer Sprühdüseneinrichtung, die insbesondere zum Besprühen eines Giessstrangs beim Abgiessen von metallischen Produkten dient, bei dem die Sprühdüseneinrichtung einen Grundkörper mit einem Lufteinlass und einen Wassereinlass sowie einen Düsenkörper mit einer Mischkammer zum Erzeugen eines Luft-/Wassergemisches aufweist, das durch wenigstens einen Düsenauslass austreten kann, wobei der Lufteinlass durch wenigstens eine Lufteinlassdüse mit einer in die Mischkammer ragenden Düsenspitze gebildet ist und dort mit mindestens einer Luftaustrittsbohrung versehen ist, während der Wassereinlass in die Mischkammer nahe der Düsenspitze des Lufteinlasses durch mindestens eine quer zur Längsachse der Mischkammer gerichtete Wasseraustrittsbohrung mündet.

Sprühdüsen dieser Art werden bekanntlich in Stranggiessanlagen zum Kühlen des Giessstrangs beim Abgiessen desselben oder bei anderen Kühl-Anwendungen, beispielsweise in der Schienenhärtung, eingesetzt. Hierbei wird eine möglichst gleichmässige Kühlwirkung des abgegebenen Kühlstrahls angestrebt, um mitunter zu verhindern, dass beim Kühlvorgang Risse im heissen Giessstrang entstehen können. Die erforderliche Kühlwirkung ist aus verfahrenstechnischen Gründen bzw. aufgrund der jeweiligen Abmessungen und/oder der Geometrie des abzugiessenden Formats unterschiedlich. Dadurch ist es erforderlich, die Dimensionierung und Ausgestaltung der Sprühdüsen auf die jeweiligen Einsatzbedingungen anzupassen, was fertigungstechnisch aufwändig ist und die Herstellungskosten verteuert.

Eine Sprühdüseneinrichtung der eingangs genannten Art ist in der Druckschrift EP 2 698 210 offenbart, bei der ein Lufteinlass durch eine Lufteinlassdüse mit einem in die Mischkammer ragenden Bereich gebildet und mit mindestens einer Luftaustrittsbohrung versehen ist, die zur Längsachse der Mischkammer einen Winkel von annähernd 90° aufweist, während der Wassereinlass durch mindestens eine nahe der Spitze des Lufteinlasses quer zur Längsachse der Mischkammer gerichtete Bohrung erfolgt. Die Herstellung der Sprühdüse erfolgt in herkömmlicher Weise durch spanabhebende Bearbeitung eines Guss- oder Walzstücks. Dies bedingt das Vorsehen einer verhältnismässig voluminösen Form des Gussstücks und eine relativ aufwändige Fertigung.

Der Erfindung liegt die Aufgabe zugrunde, diese Nachteile zu beheben und ein Verfahren zum Herstellen einer Sprühdüseneinrichtung der eingangs genannten Art zu schaffen, welches eine einfache kostengünstige Herstellung mit Materialeinsparungen ermöglicht und die Ausbildung der Sprühdüseneinrichtung derart erlaubt, dass eine optimierte Luft/Wassermischung in der Mischkammer bei geringerer Medienzufuhr und engen Platzverhältnissen eine äusserst gleichmässige Sprühwirkung auf der Strangoberfläche oder anderen Objekten erzeugbar ist.

Diese Aufgabe ist erfindungsgemäss dadurch gelöst, dass mindestens der Teilbereich der Sprühdüseneinrichtung, der die Lufteinlassdüse mit der mindestens einen Luftaustrittsbohrung und/oder den Wassereinlass mit der mindestens einen Wasseraustrittsbohrung aufweist, durch ein vorzugsweise als 3D-Druckverfahren arbeitendes generatives Herstellungsverfahren erzeugt wird.

Dadurch können der Lufteinlass mit der Düsenspitze und der Wassereinlass mit der mindestens einen Wasseraustrittsbohrung derart ausgestaltet werden, dass diese optimierte Luft/Wassermischung in der Mischkammer erzeugbar ist und die Sprühwirkung maximiert wird. Entsprechend kann der Herstellungsvorgang der Sprühdüseneinrichtung fertigungstechnisch vereinfacht werden, indem sie mindestens in dem einen Teilbereich mit dem additiven Fertigungsverfahren erzeugt wird.

Ausserdem entfällt die aufwändige Fertigung durch das spannabhebende Bearbeiten des Rohstücks. Die vorgeschlagene Verfahrensweise ermöglicht zudem eine raumsparende Ausbildung der Mischkammer des Düsenkörpers, so dass eine erheblich kompaktere Bauweise erzielt wird. Weitere Vorteile sind eine Reduzierung des Luft- und Wasserverbrauchs, eine Verbesserung der Produktqualität durch bessere Kühlung des Produkts und eine längere Haltbarkeit, welche durch die Ausgestaltung der Sprühdüseneinrichtung ermöglicht wird.

Es ist in diesem Sinne vorteilhaft, wenn sich die Sprühdüseneinrichtung erfindungsgemäss aus einem den Lufteinlass und den Wassereinlass enthaltenden flachen Grundkörper mit einer plattenförmigen Abdeckung und einem die Mischkammer bildenden zylindrischen Düsenkörper mit dem Düsenauslass für das Luft-Wassergemisch zusammensetzt.

Da der zylindrische Düsenkörper in der Regel nur wenig bearbeitet werden muss, ist es oft von Vorteil, wenn nur der Grundkörper und/oder die plattenförmige Abdeckung vorzugsweise als einteilige Baueinheit durch das generative Herstellungsverfahren erzeugt werden. Im Rahmen der Erfindung ist es dennoch ohne weiteres möglich, auch den Düsenkörper gegebenenfalls einstückig mit dem Grundkörper und der Abdeckung durch das generative Herstellungsverfahren anzufertigen. Es könnte auch jeweils nur der Grundkörper oder die plattenförmige Abdeckung generativ hergestellt werden.

Zwecks einer kompakten Bauweise ist es vorteilhaft, wenn der Lufteinlass und der Wassereinlass in die Mischkammer in einer Ebene quer zu deren Längsachse annähernd auf gleicher Höhe verlaufend münden.

Es ist auch zweckmässig, wenn die Sprühdüseneinrichtung zwei oder mehrere diametral zueinander in die Mischkammer führende Wassereinlasskanäle aufweist, die quer zur Längsachse der Mischkammer verlaufen und auch im Grundkörper und der Abdeckung bei deren einander zugewandten Auflageflächen geformt sind.

Die Erfindung sieht ferner vor, dass in der Düsenspitze sternförmig quer zur Längsachse der Mischkammer verlaufende Luftaustrittsbohrungen ausgebildet sind. Es ist dabei vorteilhaft, wenn die Wasseraustrittsbohrungen der Düse radial in die Mischkammer zwischen jeweils zwei der mehreren Luftaustrittsbohrungen geführt sind. Auf diese Weise ist es möglich, die Durchmischung von Luft und Wasser in der Kammer zu verbessern.

Aufgrund der im Giessbetrieb herrschenden Bedingungen sieht die Erfindung auch vor, dass die Sprühdüse vorzugsweise aus rostfreiem Stahl hergestellt wird. Es könnten aber auch andere Werkstoffe, wie Messing, mit ähnlichen Eigenschaften verwendet werden.

Die Erfindung sowie weitere Vorteile derselben sind nachfolgend anhand von Ausführungsbeispielen unter Bezugnahme auf die Zeichnung näher erläutert. Es zeigen:
- Fig.1: einen Längsschnitt einer erfindungsgemässen Sprühdüseneinrichtung;
- Fig. 2: eine Draufsicht einer Abdeckung der Sprühdüseneinrichtung nach Fig. 1;
- Fig. 3: eine Ansicht von unten der Sprühdüseneinrichtung nach Fig. 1; und
- Fig. 4: einen perspektivischen teilweisen Längsschnitt der Sprühdüseneinrichtung ohne Düsenkörper.

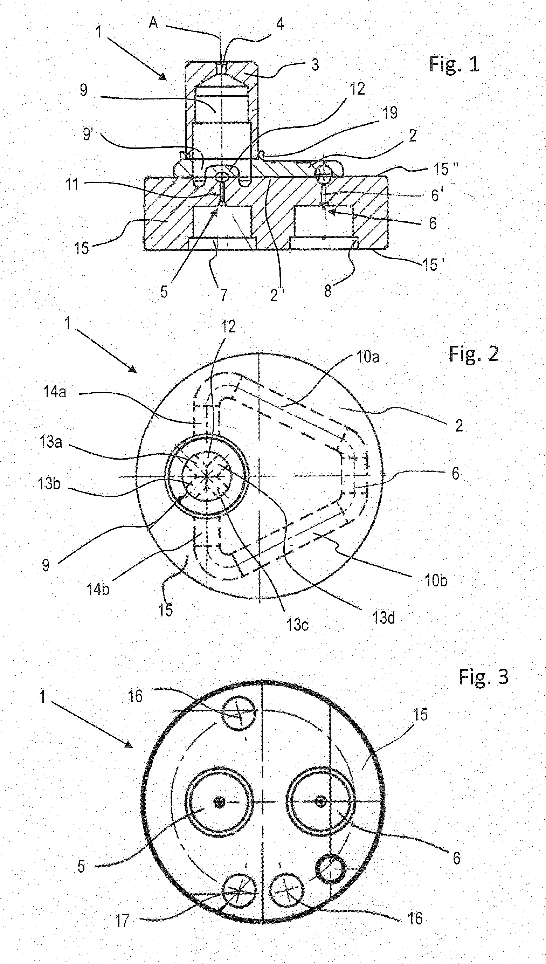

Die in Fig. 1 bis Fig. 4 gezeigte Sprühdüseneinrichtung 1 dient insbesondere zum Besprühen eines Giessstranges beim Abziehen aus einer Kokille bei einer herkömmlichen Stranggiessanlage, die zum Erzeugen von metallischen Produkten verwendet wird. Es sind aber auch andere Kühl-Anwendungen von erzeugten Metallprodukten, wie zum Beispiel einer Schienenhärtung, möglich, oder die reihenweise angeordneten Sprühdüseneinrichtungen könnten des weiteren bei gegossenen metallischen Produkten oder nach dem Auszug stehender Stränge zum Beispiel bei Vertikalgiessanlagen oder dergleichen eingesetzt werden.

Die Sprühdüseneinrichtung 1 ist aus einem scheibenförmigen Grundkörper 15, einer an diesen anschliessende plattenförmige Abdeckung 2 und aus einem zylindrischen Düsenkörper 3 mit mindestens einem Sprühdüsenauslass 4 für das Luft-Wassergemisch zusammengesetzt. Der Grundkörper 15 weist einen Lufteinlass 5 und einen Wassereinlass 6 mit nebeneinander angeordneten Anschlussbohrungen 7, 8 für je eine nicht dargestellte Luft- bzw. Wasserzuleitung auf.

Im Düsenkörper 3 ist die ebenfalls zylinderförmige Mischkammer 9 und zentral der Sprühdüsenauslass 4 ausgebildet. Gegenüberliegend ragt eine Düsenspitze 12 des Grundkörpers 15 in die Mischkammer 9, durch die ein ringförmiger Kammereinlass 9' der Mischkammer 9 gebildet ist, der zwischen den einander zugewandten Auflageflächen 15", 2' des Grundkörpers 15 und der Abdeckung 2 geformt ist. Der Sprühdüsenauslass 4 für das Luft-Wassergemisch könnte auch mit mehreren Auslässen versehen sein. Bei der Abdeckung 2 ist ein vorstehender Flansch 19 ausgebildet, in dem der Düsenkörper 3 befestigt und zentriert ist, so dass er sich koaxial zu der Düsenspitze 12 und dem ringförmigen Kammereinlass 9' erstreckt.

Erfindungsgemäss sind dem Wassereinlass 6 zwei diametral in den Kammereinlass 9' der Mischkammer 9 führende Wassereinlasskanäle 10a, 10b zugeordnet, die in die Mischkammer in einer Ebene quer zu deren Längsachse A annähernd in gleicher Höhe und, wie in Fig. 2 und Fig. 3 ersichtlich ist, auch zwischen den Grundkörper 15 und die Abdeckung 2 bei deren einander zugewandten Auflageflächen 15", 2' verlaufend einmünden. Der Lufteinlass 5 wird seinerseits durch eine Lufteinlassdüse 11 gebildet, deren in die Mischkammer 9 hineinragende Düsenspitze 12 mit vier sternförmig ausgebildeten Luftaustrittsbohrungen 13a bis 13d versehen ist.

Die mit der wenigstens einen Wasserzufuhrleitung 6' verbundenen Wassereinlasskanäle 10a, 10b münden nahe der Düsenspitze 12 in quer zur Längsachse A der Mischkammer 9 gerichtete Wasseraustrittsbohrungen 14a, 14b, die radial in die Mischkammer zwischen jeweils zwei der vier Luftaustrittsbohrungen 13a bis 13d geführt sind. Dabei sind die Wassereinlasskanäle 10a, 10b ausgehend vom Wassereinlass 6 jeweils kurvenförmig in der Abdeckung 2 so geführt, dass sie von aussen radial in die Mischkammer 9 münden.

Selbstverständlich können sowohl die Anzahl der Luftaustrittsbohrungen als auch der Wasseraustrittsbohrungen variieren, bei denen jeweils nur eine oder auch mehrere vorgesehen sein könnten.

Vorzugsweise sind die Wassereinlasskanäle 10a, 10b sowie die Wasseraustrittsbohrungen 13a, 13b und die Luftaustrittsbohrungen 14 bis 14d annähernd senkrecht zur Längsachse A der Mischkammer 9 ausgerichtet. Im Rahmen der Erfindung können sie aber auch leicht geneigt zur Längsachse geführt sein. Ebenso könnten diese Anschlussbohrungen für das Wasser und/oder die Luft seitlich im Düsenkörper 3 vorgesehen sein.

Diese Wassereinlasskanäle 10a, 10b sind im Querschnitt gesehen hälftig im Grundkörper 15 und hälftig in der Abdeckung 2 ausgebildet. Sie könnten aber auch nur oder teils im einen oder andern vorgesehen sein.

Der Düsenkörper 3 mit dem Düsenauslass 4 ist koaxial zu dem Lufteinlass 5 und der Düsenspitze 12 im Grundkörper 15 angeordnet, während der Wassereinlass 6 parallel zum Lufteinlass 5 ausgerichtet und durch die in den Kammereinlass 9' der Mischkammer 9 führenden Wassereinlasskanäle 10a, 10b verbunden ist. Vorzugsweise ist sowohl der Düsenkörper 3 und mit ihm der Lufteinlass 5 und die Düsenspitze 12 als auch der Wassereinlass 6 beabstandet zum Zentrum des Grundkörpers 15 angeordnet. Damit wird mitunter diese Kompaktheit der Sprühdüse ermöglicht.

Gemäss Fig. 3 sind im Grundkörper 15 Bohrungen 16, 17 vorgesehen, die für die Montage der Sprühdüseneinrichtung 1 dienen. Die Stirnseite 15' des Grundkörpers 15 wird bei einer Montage an einer Struktur angeschlagen, der Grundkörper daran befestigt und die Zuleitungen angeschlossen.

Beim Herstellungsverfahren der Sprühdüseneinrichtung wird erfindungsgemäss mindestens ein Teilbereich des Grundkörpers 15 und der Abdeckung 2, welche die in die Mischkammer 9 ragende Lufteinlassdüse 11 mit den Lufteintrittsbohrungen 13a bis 13d sowie den Wassereinlass 6 mit den Wassereinlasskanälen 10a, 10b und den Wasseraustrittsbohrungen 14a, 14b aufweisen, durch ein vorzugsweise als 3D-Druckverfahren arbeitendes generatives Herstellungsverfahren erzeugt.

Bei diesem dreidimensionalen Druckverfahren wird das zu produzierende Teil lagenweise mit Pulver und dann durch Laserschweissen mit selektivem Laserschmelzen (SLM) oder Lasersintern (SLS) und/oder ähnlichem als Druckverfahren erzeugt. Das wird in dem vorliegenden Ausführungsbeispiel so durchgeführt, dass der Grundkörper 15 und die plattenförmige Abdeckung 2 einstückig durch das generative Herstellungsverfahren erzeugt werden, während der zylindrische Düsenkörper 3 wegen des dort sonst geringen Bearbeitungsaufwandes in herkömmlicher Weise hergestellt wird. Es ist ebenfalls möglich, auch den Düsenkörper 3 separat oder monolithisch mit dem Grundkörper 15 und der Abdeckung 2, oder aber alle drei Teile einzeln als separate Bauteile oder monolithisch nach dem generativen Herstellungsverfahren herzustellen.

Durch dieses 3D-Druckverfahen werden die sonst bei einer spanabhebenden Bearbeitung entstehenden Fertigungskosten reduziert. Zudem werden Materialverluste weitgehend vermieden und die Vorteile der kompakten Bauweise hinsichtlich Material- bzw.Gewichtseinsparung ausgenutzt.

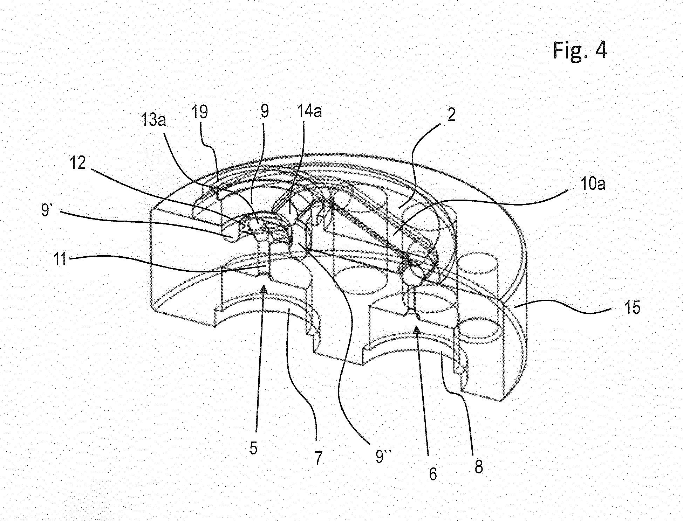

Fig. 4 zeigt die Sprühdüseneinrichtung 1 ohne den Düsenkörper 3 mit dem Grundkörper 15, die an diesen anschliessende Abdeckung 2 im Teilschnitt und den Flansch 19 für die Aufnahme des Düsenkörpers. Im Grundkörper 15 sind der Lufteinlass 5 und der Wassereinlass 6 mit den nebeneinander angeordneten Anschlussbohrungen 7, 8 für die nicht dargestellte Luft- bzw. Wasserzuleitung ersichtlich. Zudem ist der ringförmige Kammereinlass 9' der Mischkammer 9 mit einer im Querschnitt halbrunden unteren Ringfläche 9" ausgebildet. Die Wassereinlasskanäle 10a, 10b sind wie oben erwähnt ausgehend vom Wassereinlass 6 jeweils kurvenförmig in der Abdeckung 2 geführt und radial in die Mischkammer 9 geleitet.

Die Erfindung ist mit dem erläuterten Ausführungsbeispiel ausreichend dargetan. Als Variante könnte der Grundkörper und der Düsenkörper mit anderen Aussenformen versehen sein. Es könnte auch nur ein Wassereinlass oder je nach Bedarf mehr als zwei von denen integriert sein. Der Grundkörper und die Abdeckung könnten einteilig hergestellt sein. Ebenso könnte die Düsenspitze anders als dargestellt geformt sein und nur mit einer oder zwei zum Beispiel radialen Luftaustrittsbohrungen versehen sein.

Auch das generative Fertigungsverfahren für zumindest einen Teil der Sprühdüseneinrichtung kann variiert werden. So kann der Grundkörper und/oder der Düsenkörper oder Teile davon durch das Binder Jetting 3D-Druckverfahren erzeugt werden.

## Patentansprüche

1. Verfahren zum Herstellen einer Sprühdüseneinrichtung, die insbesondere zum Besprühen eines Giessstrangs beim Abgiessen von metallischen Produkten dient, bei dem die Sprühdüseneinrichtung (1) einen Grundkörper (15) mit einem Lufteinlass (5) und einem Wassereinlass (6) sowie einen Düsenkörper (3) mit einer Mischkammer (9) zum Erzeugen eines Luft-/Wassergemisches aufweist, das durch wenigstens einen Düsenauslass (4) austreten kann, wobei der Lufteinlass (5) durch wenigstens eine Lufteinlassdüse (11) mit einer in die Mischkammer (9) ragenden Düsenspitze (12) gebildet und dort mit mindestens einer Luftaustrittsbohrung (13a bis 13d) versehen ist, während der Wassereinlass (6) in die Mischkammer nahe der Düsenspitze (12) des Lufteinlasses durch mindestens eine quer zur Längsachse der Mischkammer gerichtete Wasseraustrittsbohrung (14a, 14b) mündet, **dadurch gekennzeichnet, dass** mindestens ein Teilbereich der Sprühdüseneinrichtung (1), der die in die Mischkammer (9) ragende Lufteinlassdüse (11) mit der mindestens einen Luftaustrittsbohrung (13a bis 13d) und/oder den Wassereinlass (6) mit der mindestens einen Wasseraustrittsbohrung (14a, 14b) aufweist, durch ein vorzugsweise als 3D-Druckverfahren arbeitendes generatives Herstellungsverfahren erzeugt wird.

2. Verfahren nach Anspruch 1, **dadurch gekennzeichnet, dass** der Grundkörper (15) mit der Düsenspitze (12) und die plattenförmige Abdeckung (2) als Teilbereich einstückig durch das als 3D-Druckverfahren arbeitende generative Herstellungsverfahren gefertigt sind.

3. Verfahren nach Anspruch 1, **dadurch gekennzeichnet, dass** der Grundkörper (15) mit der Düsenspitze (12), die plattenförmige Abdeckung (2) und der Düsenkörper (3) einstückig durch das als 3D-Druckverfahren arbeitende generative Herstellungsverfahren gefertigt sind.

4. Verfahren nach einem der Ansprüche 1 bis 3, **dadurch gekennzeichnet, dass**
für das generative Herstellungsverfahren als dreidimensionales Druckverfahren ein selektives Laserschmelzen (SLM), Lasersintern (SLS), Binder Jetting 3D Druckverfahren und/oder ähnlichem angewendet wird.

5. Sprühdüseneinrichtung, die zumindest in einem Teilbereich insbesondere nach dem Verfahren nach einem der Ansprüche 1 bis 4 hergestellt ist, **dadurch gekennzeichnet, dass**
sie sich aus einem den Lufteinlass (5) und den Wassereinlass (6) enthaltenden Grundkörper (15) mit einer plattenförmigen Abdeckung (2) und einem die Mischkammer (9) bildenden Düsenkörper (3) mit dem Düsenauslass (4) für das Luft-/Wassergemisch zusammensetzt.

6. Sprühdüseneinrichtung nach Anspruch 5, **dadurch gekennzeichnet, dass**
zumindest der Grundkörper (15) und die plattenförmige Abdeckung (2) durch das generative Herstellungsverfahren erzeugt sind.

7. Sprühdüseneinrichtung nach Anspruch 5 oder 6, **dadurch gekennzeichnet, dass**
die mindestens eine Luftaustrittsbohrung (13a bis 13d) und die mindestens eine Wasseraustrittsbohrung (14a, 14b) in die Mischkammer (9) quer zu ihrer Längsachse in einer Ebene annähernd auf gleicher Höhe münden.

8. Sprühdüseneinrichtung nach einem der Ansprüche 5 bis 7, **dadurch gekennzeichnet, dass**
zwei oder mehrere diametral zueinander in die Mischkammer (9) ausgerichtete Wassereinlasskanäle (10a, 10b) vorgesehen sind, die quer zur Längsachse der Mischkammer (9) verlaufen und auch im Grundkörper (15) und der Abdeckung (2) bei deren einander zugewandten Auflageflächen geformt sind.

9. Sprühdüseneinrichtung nach einem der Ansprüche 5 bis 8, **dadurch gekennzeichnet, dass**
in der Düsenspitze (12) mehrere sternförmig quer zur Längsachse der Mischkammer (9) verlaufende Luftaustrittsbohrungen (13a bis 13d) ausgebildet sind, die im Zentrum mit dem Lufteinlass (5) verbunden sind.

10. Sprühdüseneinrichtung nach einem der Ansprüche 5 bis 9, **dadurch gekennzeichnet, dass**
zwei Wasseraustrittsbohrungen (14a, 14b) radial in die Mischkammer (9) münden, die jeweils zwischen zwei der Luftaustrittsbohrungen (13a bis 13d) angeordnet sind.

11. Sprühdüseneinrichtung nach einem der Ansprüche 5 bis 10, **dadurch gekennzeichnet, dass**
der Düsenkörper (3) mit dem Düsenauslass (4) koaxial zu dem Lufteinlass (5) und der Düsenspitze (12) im Grundkörper (15) angeordnet ist, während der Wassereinlass (6) parallel zum Lufteinlass (5) ausgerichtet und durch die in den Kammereinlass (9') der Mischkammer (9) führenden Wassereinlasskanäle (10a, 10b) verbunden ist.

12. Sprühdüseneinrichtung nach einem der Ansprüche 5 bis 11, **dadurch gekennzeichnet, dass**
der Grundkörper (15), die plattenförmige Abdeckung (2) und/oder der Düsenkörper (3) aus rostfreiem Stahl oder anderen Werkstoffen, wie zum Beispiel Messing, hergestellt sind.
